# EUROPÄISCHE PATENTANMELDUNG

(11) **EP 1 400 409 A2**
(43) Veröffentlichungstag der Anmeldung: **24.03.2004**
(21) Anmeldenummer: 03020999.3
(22) Anmeldetag: 17.09.2003
(51) Int. Cl.: B60R 1/00, H04N 5/262

(54) **Verfahren zur Bildverarbeitung der von einem System zur Umfelderfassung eines Fahrzeuges erfassten optischen Signale und System zur Umfelderfassung eines Fahrzeuges**

(30) Priorität: 19.09.2002 DE 10243620
(71) Anmelder: Valeo Schalter und Sensoren GmbH, 74321 Bietigheim-Bissingen (DE)
(72) Erfinder: Meyer, Thorsten, 74321 Bietigheim-Bissingen (DE); Hurtado, Miguel, IN 47906, West Lafayette (US); Hedderich, Markus, 70190 Stuttgart (DE); Benz, Jürgen, 74354 Besigheim (DE)
(74) Vertreter: Dreiss, Fuhlendorf, Steimle & Becker

(57) **Zusammenfassung**

Die Erfindung betrifft ein Verfahren zur Bildverarbeitung der von einem System zur Umfelderfassung eines Fahrzeuges mittels einer Eingangseinheit erfassten optischen Signale, wobei die optischen Signale in digitale Bildpunkte gewandelt werden. Die Erfindung betrifft außerdem ein System zur Umfelderfassung eines Fahrzeuges.

Die Erfindung kennzeichnet sich dadurch, dass Eingangsbildpunkte mittels einer Entzerrungsfunktion so verarbeitet werden, dass man digitale Ausgangsbildpunkte erhält, die zu einem weitgehend unverzerrten Ausgangsbild zusammensetzbar sind.

## Beschreibung

Die Erfindung betrifft ein Verfahren zur Bildverarbeitung der von einem System zur Umfelderfassung eines Fahrzeuges mittels einer Eingangseinheit erfassten optischen Signale, wobei die optischen Signale in digitale Bildpunkte gewandelt werden. Die Erfindung betrifft außerdem ein System zur Umfelderfassung eines Fahrzeuges, bei welchem Verfahren zur Bildverarbeitung Verwendung finden. Solche Systeme sind beispielsweise als Automobil-Rückkamerasysteme bekannt, wobei das von der Eingangseinheit erfasste Umfeld, das hierbei hinter dem Fahrzeug liegt, mittels beispielsweise eines Monitors oder Displays dem Fahrzeuglenker angezeigt wird. Solche Systeme vereinfachen das Rangieren und den Einparkvorgang.

Um einen möglichst großen Bereich des Fahrzeugumfeldes erfassen zu können, finden insbesondere Eingangseinheiten Verwendung, die eine starke Weitwinkeloptik aufweisen. Aufgrund dieser Weitwinkeloptik weist das Aüsgangsbild eine fischaugenartige Bildverzerrung auf, die auf den Fahrzeuglenker verwirrend wirkt und die Nützlichkeit des Systems mindert. Die Verwendung einer verzerrungsfreien Weitwinkeloptik ist sehr kostenintensiv.

Zur Verminderung einer derartigen Bildverzerrung ist beispielsweise aus der FR 2794700 bekannt geworden, nichtebene Spiegel vor der Eingangskamera anzuordnen. Ferner ist beispielsweise aus der DE 199 25 131 bekannt geworden, eine mechanische Blickfeldwahl durch Bewegen der Kamera zu realisieren. In der DE 100 31 590 wird eine Blickfeldwahl über einen Spiegel realisiert.

Der vorliegenden Erfindung liegt nun die Aufgabe zugrunde, ein eingangs beschriebenen Verfahren und ein eingangs beschriebenes System derart fortzubilden, dass der Fahrzeuglenker das ihm angezeigte Ausgangsbild einfach und effektiv als Hilfe, zum Beispiel für das Rangieren und Einparken des Fahrzeuges, verwenden kann. Das Verfahren bzw. das System soll hierbei ohne zusätzliche, mechanisch zu betätigende Hilfsmittel, wie beispielsweise Spiegel oder Kameraschwenkeinrichtungen auskommen.

Diese Aufgabe wird gelöst durch ein Verfahren der eingangs beschriebenen Art, das sich dadurch kennzeichnet, dass die digitalen Eingangsbildpunkte mittels einer Entzerrungsfunktion so verarbeitet werden, dass man digitale Ausgangsbildpunkte erhält, die zu einem weitgehend unverzerrten Ausgangsbild zusammensetzbar sind. Dies hat den Vorteil, dass ein Ausgangsbild erzeugbar ist, das frei von fischaugenartigen Bildverzerrungen ist. Das Ausgangsbild kann damit effektiv als Hilfe für das Rangieren und Einparken des Fahrzeuges verwendet werden.

Die Entzerrungsfunktion kann hierbei eine mathematische Funktion sein oder in Form einer Datentabelle dargestellt sein. Dabei ist denkbar, dass die Entzerrungsfunktion ausgehend von einem Referenzbildpunkt, der insbesondere ein einstellbarer Bildmittelpunkt sein kann, jeden Ausgangsbildpunkt gemäß einer stetigen Funktion entlang seines Radius relativ zum Referenzbildpunkt verschiebt. Die stetige Funktion berücksichtigt hierbei den Grad der Bildverzerrung, der in erster Linie von der Qualität der Optik abhängt.

Bei einer Ausführungsform der Erfindung kann vorgesehen sein, dass mittels der Entzerrungsfunktion eine Matrix errechnet wird, die für jeden Ausgangsbildpunkt die Adresse des korrespondierenden Eingangsbildpunktes enthält. Hierdurch kann eine eindeutige Zuordnung der Ausgangsbildpunkte zu den Eingangsbildpunkten erreicht werden.

Entsprechend ist denkbar, dass mittels der Entzerrungsfunktion eine Matrix errechnet wird, die für jeden Ausgangsbildpunkt den Farbwert des Eingangsbildpunktes kopiert. Damit entspricht der Farbwert des Ausgangsbildpunktes dem Farbwert des Eingangsbildpunktes.

Die eingangs genannte Aufgabe wird außerdem durch ein Verfahren gelöst, dass sich dadurch kennzeichnet, dass die digitalen Eingangsbildpunkte mittels einer Ausschnittsfunktion so verarbeitet werden, dass man digitale Ausgangsbildpunkte erhält, die zu einem Ausgangsbild derart zusammensetzbar sind, dass sie einen Ausschnitt des erfassten Umfeldes bzw. des Eingangsbildes darstellen. Als Ausgangsbild erhält man folglich lediglich einen Ausschnitt des Eingangsbildes. Dies hat den Vorteil, dass nicht relevante Bereiche des Eingangsbildes, beispielsweise stark verzerrte Randbereiche des Eingangsbildes, dem Fahrzeuglenker nicht angezeigt werden. Das dem Fahrzeuglenker angezeigte Ausgangsbild beinhaltet dabei vorzugsweise lediglich die Information, die für den Fahrzeuglenker erforderlich ist.

Bei einer vorteilhaften Ausführungsform der Erfindung hängt die Entzerrungsfunktion und/oder die Ausschnittsfunktion ab von Daten über den Fahrzustand und/oder die Fahrzeugumgebung. Besonders vorteilhaft ist, wenn die Ausschnittsfunktion abhängt von dem Lenkwinkel des Fahrzeuges und/oder von der Fahrzeuggeschwindigkeit. Hierdurch wird erreicht, dass beispielsweise beim Einparkvorgang lediglich der Ausschnitt des Eingangsbildes als Ausgangsbild dargestellt wird, in den sich das Fahrzeug bewegt. Wird beispielsweise das Lenkrad stark in eine Richtung eingeschlagen, so wird lediglich der Ausschnitt des Eingangsbildes dargestellt, der den Bereich abdeckt, in den sich das Fahrzeug bewegt.

Dabei kann mittels der Ausschnittsfunktion eine Matrix errechnet werden, die einen rechteckigen Ausschnitt des Eingangsbildes auf die volle Größe einer Ausgabeeinheit, also des Ausgangsbildes eines Monitors oder eines Displays, vergrößert.

Beim erfindungsgemäßen Verfahren kann vorgesehen sein, dass je ein Bitmap-Speicher für das Eingangsbild und für das Ausgangsbild angelegt wird. Dies kann beispielsweise im Rahmen einer Windows-Softwareapplikation erfolgen. Ferner ist denkbar, dass eine Interpolation zwischen den Eingangsbildpunkten und den Ausgangsbildpunkten zur Erreichung einer verbesserten Bildqualität durchgeführt wird.

Die eingangs genannte Aufgabe wird außerdem gelöst durch ein System zur Umfelderfassung eines Fahrzeuges, mit einer Eingangseinheit zur Erzeugung von Eingangsbildpunkten aus erfassten optischen Signalen, mit einer Bildverarbeitungseinrichtung zur Verarbeitung der Eingangsbildpunkte zu Ausgangsbildpunkten und mit einer Ausgangseinheit zur Wiedergabe der Ausgangsbildpunkte, wobei die Bildverarbeitung zur Durchführung des erfindungsgemäßen Verfahrens geeignet ist.

Vorteilhafterweise ist die Bildverarbeitungseinrichtung mit Sensoren für den Fahrzustand und/oder die Fahrzeugumgebung verbunden. Hierdurch kann bei der Datenverarbeitung der Fahrzustand und/oder die Fahrzeugumgebung berücksichtigt werden.

Bei dem erfindungsgemäßen System kann es sich insbesondere um ein Rückkamerasystem zur Überwachung des hinter dem Fahrzeug gelegenen Bereichs handeln. Hierdurch kann insbesondere das Rückwärtseinparken und Rückwärtsrangieren erleichtert werden.

Bei einer Ausführungsform der Erfindung kann die Eingangseinheit eine Videoeinheit und die Ausgangseinheit eine Videoausgabeeinheit sein. Derartige Einheiten können als Standardbauteile kostengünstig bezogen werden.

Weitere vorteilhafte Einzelheiten und Ausgestaltungen der Erfindung sind der folgenden Beschreibung zu entnehmen, in der die Erfindung anhand eines Ausführungsbeispieles näher beschrieben und erläutert ist.

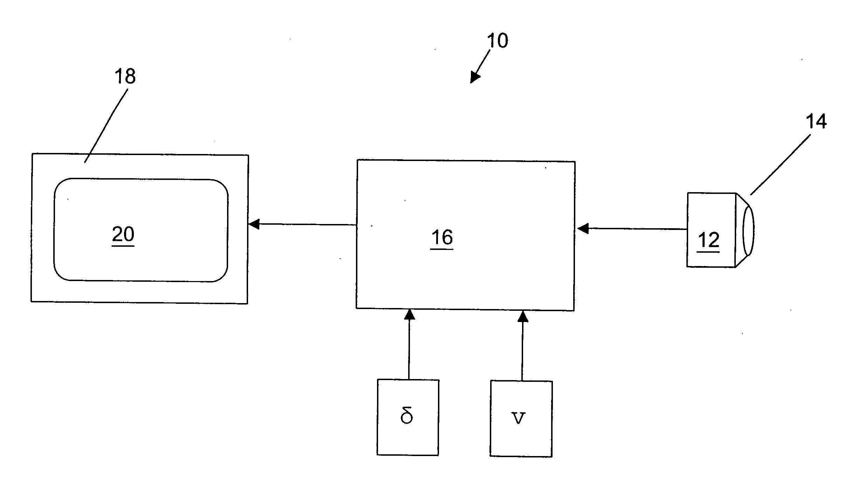

In der Figur ist ein erfindungsgemäßes System 10 schematisch dargestellt. Das System umfasst eine Eingangseinheit 12 in beispielsweise Form einer Videokamera. Die Eingangseinheit 12 weist eine starke Weitwinkeloptik 14 auf, um einen möglichst großen Bereich des Umfeldes des Fahrzeuges erfassen zu können. Die Optik 14 ist eine relativ unaufwändige, kostengünstige Optik, die zu fischaugenartigen Verzerrungen führt. Die Eingangseinheit 12 wandelt die von der Optik 14 erfassten optischen Signale in elektrische Signale um, insbesondere in digitale Eingangsbildpunkte. Diese werden einer Bildverarbeitungseinrichtung 16 zugeführt. Die Bildverarbeitungseinrichtung 16 verarbeitet die Eingangsbildpunkte zu Ausgangsbildpunkten derart, dass die Ausgangsbildpunkte zu einem weitgehend unverzerrten Ausgangsbild zusammensetzbar sind. Ein derartiges, weitgehend unverzerrtes Ausgangsbild wird dem Fahrzeuglenker über eine Ausgangseinheit 18, insbesondere in Form einer Videoausgabe, die einen Monitor oder ein Display 20 umfasst, angezeigt. Je nach Ausführungsform der Erfindung ist denkbar, dass die Bildverarbeitungseinrichtung 16 innerhalb der Kamera 12 oder innerhalb der Ausgabeeinheit 18 angeordnet sein kann.

Die Bildverarbeitungseinrichtung 16 umfasst vorzugsweise eine geeignete programmierbare Prozessoreinheit, zum Beispiel einen 3D-Grafikprozessor oder eine geeignet gestaltete Hardware, wie beispielsweise einen ASIC. Gemäß der geeigneten Entzerrungsfunktion werden dabei die Eingangsbildpunkte und/oder die Ausgangsbildpunkte in digitale Bildspeicher geschrieben, so dass sich insbesondere das korrigierte Ausgangsbild als sogenanntes Bitmap ergibt. Dabei werden einzelne Bildpunkte unter Umständen mehrfach oder nicht geschrieben. Die Entzerrungsfunktion kann direkt als mathematische Funktion oder indirekt in Form von Datentabellen dargestellt werden. Ferner kann eine Interpolation zwischen den Eingangsbildpunkten zur Erreichung einer verbesserten Bildqualität vorgenommen werden. Die Entzerrungsfunktion kann ferner zum Beispiel ausgehend von einem einstellbaren Bildmittelpunkt jeden Ausgangsbildpunkt gemäß einer stetigen Funktion Rₙₑᵤ= f (Rₐₗₜ) entlang seines Radius relativ zum Bildmittelpunkt verschieben. Dabei können weitere Parameter der Entzerrungsfunktion so gewählt werden, dass die für den Fahrzeuglenker wesentlichen Bereiche des Eingangsbildes im Ausgangsbild gut sichtbar sind. Dabei sollte in typischen Fahrsituationen das Ausgangsbild weitgehend keine Verzerrungen aufweisen.

Um aus dem Ausgangssignal der Eingangseinheit 12 beziehungsweise der Kamera 12 digitale Pixeldaten zu erzeugen, kann beispielsweise eine Framegrabber-Karte in der Bildverarbeitungseinheit 10 vorgesehen sein.

Als weitere Eingangsgrößen der Bildverarbeitungseinrichtung 16 kommen insbesondere in Betracht zum einen der Lenkwinkel δ des Fahrzeuges und zum anderen die Geschwindigkeit v des Fahrzeuges. Je nach Lenkwinkel δ und Geschwindigkeit v des Fahrzeuges können erfindungsgemäß die digitalen Eingangsbildpunkte mittels einer Ausschnittsfunktion so verarbeitet werden, dass man Ausgangsbildpunkte erhält, die zu einem Ausgangsbild derart zusammensetzbar sind, dass sie lediglich einen Ausschnitt des Eingangsbildes darstellen. Dies hat den Vorteil, dass als Ausgangsbild auf dem Display 20 lediglich der Ausschnitt des erfassten Umfeldes angezeigt wird, der tatsächlich für den Fahrzeuglenker von Relevanz ist. Mechanische Einrichtungen zum Schwenken der Optik 14 oder der Eingangseinheit 12 sind nicht erforderlich.

Der Lenkwinkel δ des Fahrzeuges kann beispielsweise über einen Lenkwinkelsensor erfasst und der Bildverarbeitungseinrichtung mitgeteilt werden. Die Fahrzeuggeschwindigkeit kann beispielsweise über einen bekannten Tachometer erfasst werden und der Bildverarbeitungseinrichtung 16 mitgeteilt werden. Erfindungsgemäß ist ferner denkbar, dass weitere Sensoren Eingangsgrößen für die Bildverarbeitungseinrichtung 16 liefern. Anhand der von den Sensoren übertragenen und der von der Bildverarbeitungseinrichtung 16 ausgewerteten Daten wird mit einem Algorithmus bzw. mit der Ausschnittsfunktion der aktuell günstigste Bildausschnitt festgelegt. Dieser Ausschnitt kann dann auf die volle Größe des Displays 20 vergrößert werden. Als Ergebnis von Entzerrung und Ausschnittsdarstellung wird dem Fahrer ein Bild gezeigt, das eine normale Bildgeometrie ähnlich einem bekannten Fernsehbild aufweist und das die Bereiche des Fahrzeugumfeldes deutlich zeigt, welche in der aktuellen Fahrsituation wichtig sind.

Das in der Figur dargestellte System 10 eignet sich insbesondere als Rückkamerasystem für ein Fahrzeug, das zur Überwachung des gesamten hinter dem Fahrzeug gelegenen Bereichs dient.

Die Verwendung einer kostengünstigen Optik 14, die zu einer fischaugenartigen Verzerrung führt, wird folglich durch eine entsprechende Bildverarbeitung ausgeglichen. Durch Berücksichtung der Daten über den Fahrzeugzustand und/oder die Fahrzeugumgebung wird lediglich der Ausschnitt des erfassten Umfeldes als Ausgangsbild auf dem Display 20 angezeigt, der für den Fahrzeuglenker relevant ist.

Alle in der Beschreibung, der Zeichnung und den nachfolgenden Ansprüchen beschriebenen und gezeigten Merkmale können sowohl einzeln, als auch in beliebiger Kombination miteinander erfindungswesentlich sein.

## Patentansprüche

1. Verfahren zur Bildverarbeitung der von einem System (10) zur Umfelderfassung eines Fahrzeuges mittels einer Eingangseinheit erfassten optischen Signale, wobei die optischen Signale in digitale Bildpunkte gewandelt werden, **dadurch gekennzeichnet, dass** die digitalen Eingangsbildpunkte mittels einer Entzerrungsfunktion so verarbeitet werden, dass man digitale Ausgangsbildpunkte erhält, die zu einem weitgehend unverzerrten Ausgangsbild zusammensetzbar sind.

2. Verfahren nach Anspruch 1, **dadurch gekennzeichnet, dass** die Entzerrungsfunktion eine mathematische Funktion ist.

3. Verfahren nach Anspruch 1 oder 2, **dadurch gekennzeichnet, dass** die Entzerrungsfunktion in Form einer Datentabelle dargestellt ist.

4. Verfahren nach Anspruch 1, 2 oder 3, **dadurch gekennzeichnet, dass** die Entzerrungsfunktion ausgehend von einem Referenzbildpunkt jeden Ausgangsbildpunkt gemäß einer stetigen Funktion (*R*_{*neu*} = *f*(*R*_{*alt*})) entlang seines Radius relativ zum Referenzbildpunkt verschiebt.

5. Verfahren nach Anspruch 4, **dadurch gekennzeichnet, dass** der Referenzbildpunkt ein einstellbarer Bildmittelpunkt ist.

6. Verfahren nach einem der vorhergehenden Ansprüche, **dadurch gekennzeichnet, dass** mittels der Entzerrungsfunktion eine Matrix errechnet wird, die für jeden Ausgangsbildpunkt die Adresse des korrespondierenden Eingangsbildpunktes enthält.

7. Verfahren nach einem der vorhergehenden Ansprüche, **dadurch gekennzeichnet, dass** mittels der Entzerrungsfunktion eine Matrix errechnet wird, die für jeden Ausgangsbildpunkt den Farbwert des Eingangsbildpunktes kopiert.

8. Verfahren nach dem Oberbegriff des Anspruchs 1 oder nach einem der vorhergehenden Ansprüche, **dadurch gekennzeichnet, dass** die Eingangsbildpunkte mittels einer Ausschnittsfunktion so verarbeitet werden, dass man digitale Ausgangsbildpunkte erhält, die zu einem Ausgangsbild derart zusammensetzbar sind, dass sie einen Ausschnitt des erfassten Umfeldes bzw. des Eingangsbildes darstellen.

9. Verfahren nach einem der vorhergehenden Ansprüche, **dadurch gekennzeichnet, dass** die Entzerrungsfunktion und/oder die Ausschnittsfunktion abhängt von Daten über den Fahrzustand und/oder die Fahrzeugumgebung.

10. Verfahren nach einem der vorhergehenden Ansprüche, **dadurch gekennzeichnet, dass** die Entzerrungsfunktion und/oder die Ausschnittsfunktion abhängt von dem Lenkwinkel und/oder der Fahrzeuggeschwindigkeit.

11. Verfahren nach Anspruch 8, 9 oder 10, **dadurch gekennzeichnet, dass** mittels der Ausschnittsfunktion eine Matrix errechnet wird, die einen rechteckigen Ausschnitt des Eingangbildes auf die volle Größe des Ausgangsbildes vergrößert.

12. Verfahren nach einem der vorhergehenden Ansprüche, **dadurch gekennzeichnet, dass** je ein Bitmap-Speicher für das Eingangsbild und für das Ausgangsbild angelegt wird.

13. Verfahren nach einem der vorhergehenden Ansprüche, **dadurch gekennzeichnet, dass** eine Interpolation zwischen den Eingangsbildpunkten und den Ausgangsbildpunkten zur Erreichung einer verbesserten Bildqualität durchgeführt wird.

14. System (10) zur Umfelderfassung eines Fahrzeuges, mit einer Eingangseinheit (12) zur Erzeugung von Eingangsbildpunkten aus erfassten optischen Signalen, mit einer Bildverarbeitungseinrichtung (16) zur Verarbeitung der Eingangsbildpunkte zu Ausgangsbildpunkten und mit einer Ausgangseinheit (18) zur Wiedergabe der Ausgangsbildpunkte, **dadurch gekennzeichnet, dass** die Bildverarbeitungseinrichtung (10) zur Durchführung des Verfahrens nach einem der vorhergehenden Ansprüche geeignet ist.

15. System (10) nach Anspruch 14, **dadurch gekennzeichnet, dass** die Bildverarbeitungseinrichtung (16) mit Sensoren für den Fahrzustand und/oder die Fahrzeugumgebung verbunden ist.

16. System (10) nach Anspruch 14 oder 15, **dadurch gekennzeichnet, dass** das System (10) ein Rückkamerasystem zur Überwachung des hinter dem Fahrzeug gelegenen Bereichs ist.

17. System (10) nach Anspruch 14, 15 oder 16, **dadurch gekennzeichnet, dass** die Eingangseinheit (12) eine Videoeingabeeinheit und die Ausgangseinheit (18) eine Videoausgabeeinheit ist.
